# FASCICULE DE BREVET EUROPEEN

(11) **EP 2 423 708 B1**
(45) Date de publication et mention de la délivrance du brevet: **11.05.2016**
(21) Numéro de dépôt: 11179424.4
(22) Date de dépôt: 30.08.2011
(51) Int. Cl.: G01S 17/02, G01S 17/88, B61D 19/02

(54) **Système et procédé de détection d'un objet cible**
System und Verfahren zur Erfassung eines Zielobjekts
System and method for detecting a target object

(30) Priorité: 31.08.2010 FR 1003488
(43) Date de publication de la demande: 29.02.2012
(73) Titulaire: FAIVELEY TRANSPORT, 93200 Saint-Denis (FR)
(72) Inventeur: Huaulme, Patrice, 37000 TOURS (FR)
(74) Mandataire: Novagraaf Technologies

(56) Documents cités:
- US-A1- 2004 128 075
- US-A1- 2007 181 685

## Description

### DOMAINE TECHNIQUE DE L'INVENTION

L'invention se rapporte à un système et un procédé de détection d'un objet cible dans une zone d'intérêt. Ce système et ce procédé s'utilisent tout particulièrement dans le domaine ferroviaire afin de détecter la présence et la position d'un nez de quai par rapport à un train. L'invention concerne également un véhicule ferroviaire équipé d'un tel système ou utilisant un tel procédé.

### ETAT DE LA TECHNIQUE ANTERIEURE

Les véhicules ferroviaires sont généralement équipés de dispositifs mobiles d'accès tel que des marchepieds ou des comble-lacunes. Ces dispositifs, généralement placés sous les portes d'accès des véhicules, sont mobiles entre une position escamotée et une position déployée dans laquelle ils s'étendent entre un quai et un seuil d'accès au véhicule afin de faciliter l'embarquement et le débarquement des passagers.

Préalablement au déploiement de ces dispositifs mobiles entre le seuil d'accès du véhicule et le quai, il est nécessaire de s'assurer de la présence d'un quai et de connaître la position précise du nez de quai par rapport au seuil d'accès du véhicule ferroviaire.

Pour cela, plusieurs systèmes de détection de quai sont connus.

Ainsi, les documents FR2846100 et WO98/58148 décrivent des systèmes de détection de quai comportant deux récepteurs et un émetteur à ultrasons. Toutefois, ces dispositifs manquent de précision, de fiabilité dans des conditions environnementales variables de température et de précipitations, (pluie, brouillard, chaleur, froid) et de capacité de discriminer le nez de quai des obstacles tels que valises, armoires techniques. En outre, ces systèmes de localisation sont peu précis et peu fiables.

On connaît également le document EP 1 700 763 qui permet de détecter un objet autour d'un véhicule de transport en commun grâce à l'utilisation d'un scanner laser par temps de vol. Toutefois, un tel dispositif est relativement coûteux et complexe.

Le document US 2007/181685 présente un système d'identification et de mesure d'emballage automatisé déplacé par une structure de transporteur. Il décrit un système de balayage destiné à lire des codes à barres sur les emballages entrant dans le système, un système de dimensionnement d'emballage utilisant une détection et une mesure de distance par laser destiné à acquérir des informations relatives aux dimensions de chaque emballage, lorsqu'il est transporté dans le système.

### EXPOSE DE L'INVENTION

L'invention vise à remédier aux inconvénients de l'état de la technique en proposant un système simple et peu coûteux qui permette de détecter un quai, un nez de quai ou tout autre objet en bordure d'un véhicule de transport en commun, et en particulier en bordure d'un véhicule ferroviaire, de préférence en bordure d'un train.

Un autre objet de l'invention est de proposer un système et un dispositif qui permettent de calculer précisément la position d'un objet détecté par rapport à un véhicule de transport en commun, et plus particulièrement par rapport à un véhicule ferroviaire.

Un autre objet de l'invention est de proposer un système et un dispositif qui permettent de localiser précisément un objet par rapport à un véhicule de transport en commun, et plus particulièrement par rapport à un véhicule ferroviaire.

Un autre objet de l'invention est de proposer un système et un dispositif qui permettent de calculer précisément la position d'un objet détecté de manière relativement indépendante des conditions météorologiques.

Un autre objet de l'invention est de proposer un système et un dispositif qui permettent de détecter simplement la présence d'un objet cible en bordure d'un véhicule ferroviaire.

Un autre objet de l'invention est de proposer un système et un procédé de détection d'un quai qui permette de s'affranchir du dévers des voies.

Un autre objet de l'invention est de proposer un système de détection d'un quai qui ne nécessite pas d'élément supplémentaire au sol et qui s'intègre simplement au véhicule ferroviaire.

Un autre objet de l'invention est de proposer un système de détection d'un quai qui minimise les contraintes d'installation sur le véhicule ferroviaire-et en particulier qui ne nécessite pas de réglage mécanique précis, et dont l'étalonnage soit simple.

Un autre objet de l'invention est de proposer un système de détection d'un quai sans pièce mobile qui soit fiable et robuste mécaniquement.

Un autre objet de l'invention est de proposer une méthode de détection ou de reconnaissance d'un objet cible, qui demande peu de puissance de calcul, et adaptée en particulier à la détection à distance d'un nez de quai ou plus généralement à la détection de la présence d'un quai, à partir d'un véhicule, notamment ferroviaire.

Pour répondre au moins partiellement à ces objectifs est proposé selon un premier aspect de l'invention un système de détection d'un objet cible dans une zone d'intérêt située à proximité immédiate d'un véhicule de transport en commun, l'objet cible comportant au moins une arête, le système de détection comportant :
- des moyens de projection d'au moins un faisceau lumineux dans la zone d'intérêt suivant au moins une direction de projection, les moyens de projection étant agencés de telle sorte que le faisceau lumineux décrive au moins un motif projeté lorsque le faisceau lumineux rencontre une surface dans la zone d'intérêt;
- des moyens d'acquisition d'au moins une image du motif projeté depuis au moins un point de vue non aligné avec la direction de projection et de telle sorte que l'image du motif projeté présente au moins une rupture séparant l'image du motif projeté en au moins deux portions lorsque le faisceau lumineux rencontre, dans la zone d'intérêt, une arête, les moyens d'acquisition étant agencés pour détecter les portions et les ruptures de l'image du motif projeté;
- au moins une mémoire dans laquelle sont stockés un ou plusieurs gabarits;
- des moyens de comparaison de l'image du motif projeté au(x) gabarit(s) et de détermination de la présence ou de l'absence de l'objet cible en fonction de la comparaison.

Par arête, on entend une ligne d'intersection entre deux plans. L'arête concernée par ce document présente de préférence un angle compris entre 70° et 110°, de préférence sensiblement égal à 90°.

Ainsi, le système selon l'invention comporte des moyens de projection qui envoient un faisceau lumineux sur la zone d'intérêt. En l'absence d'arête dans cette zone d'intérêt, le faisceau lumineux forme un motif projeté sur une surface sans arête de cette zone d'intérêt. Lorsque le faisceau lumineux rencontre une arête, on observe une déformation du motif projeté qui présente alors une zone de discontinuité. Cette zone de discontinuité du motif projeté correspond à l'arête. Le système selon l'invention permet donc de détecter la présence d'arêtes dans la zone d'intérêt.

Selon l'invention, seules les arêtes, dans la zone d'intérêt, qui ont une direction sécante à la direction de projection seront détectées et inversement, les moyens de détection et de projection sont agencés de façon à ce que toute arête, qui est dans la zone d'intérêt, et qui est sécante à la direction de projection soit visible sur l'image du motif projeté réalisée par les moyens d'acquisition.

Il convient ensuite de savoir si les arêtes détectées appartiennent ou non à l'objet cible recherché. Pour cela, des gabarits sont enregistrés en mémoire. Ces gabarits sont représentatifs des objets cibles recherchés.

Selon un mode préférentiel de l'invention, ces gabarits représentent les différents types de quais qui peuvent se trouver le long d'un véhicule ferroviaire. Ces gabarits peuvent être réalisés en envoyant le faisceau lumineux contre chaque type de quai et en enregistrant l'image des motifs projetés déformés par la présence de chacun de ces quais. On peut également disposer dans le champ du faisceau lumineux une plusieurs cibles d'étalonnage représentatives de différentes hauteurs de quai et associées au(x) gabarit(s), lors d'une procédure d'étalonnage.

L'image du motif projeté est ensuite comparée aux gabarits en mémoire de façon à détecter si un des motifs projeté présente une déformation semblable à celle créée par un type de quai connu.

Dans la mesure où le positionnement des moyens de projection et des moyens d'acquisition l'un par rapport à l'autre et par rapport à leur support ne varie pas entre la phase d'étalonnage et la phase ultérieure d'utilisation, aucune transposition de repère n'est nécessaire entre l'image du motif projeté et celle du gabarit.

Suivant différents modes de réalisation, l'image du motif projeté peut être comparée aux gabarits en superposant l'image du motif projeté aux gabarits ou alors en comparant les coordonnées géométriques des portions de motifs dans l'image réalisée par les moyens d'acquisition aux coordonnées géométriques des gabarits.

Selon un mode préférentiel de réalisation de l'invention, les moyens de projection, les moyens d'acquisition et la zone d'intérêt sont agencés aux sommets d'un triangle, qui peut être isocèle et/ou rectangle.

Avantageusement, les moyens de projection et les moyens d'acquisition sont agencés de telle sorte que l'image du motif projeté présente au moins une rupture séparant l'image du motif projeté en au moins deux portions lorsque le faisceau lumineux rencontre une arête à l'intersection entre un plan vertical et un plan horizontal.

En effet, le système de détection selon l'invention est tout particulièrement destiné à la détection d'un nez de quai. Par conséquent, le système de détection est agencé pour que le motif projeté soit déformé par un nez de quai, c'est-à-dire par une arête entre un plan horizontal (la surface supérieure du quai) et un plan vertical (la face avant du quai).

De préférence, le système de détection selon l'invention est agencé pour détecter une arête formant un angle sensiblement égal à 90°.

Avantageusement, le système de détection selon l'invention comporte en outre des moyens de détermination du type d'objet cible présent en fonction du résultat de la comparaison de l'image du motif projeté au(x) gabarit(s).

Selon un mode de réalisation de l'invention, les moyens de comparaison permettent de comparer chaque portion de l'image du motif projeté à au moins un gabarit, ce qui permet de sélectionner la portion de l'image du motif projeté qui représente l'objet cible.

En effet, le motif projeté peut être séparé par plusieurs ruptures alors que l'objet cible recherché ne comporte qu'une arête. En effet, des objets non cibles (par exemple des cailloux, des câbles, des imperfections dans la zone d'intérêt, des fissures...) peuvent également créer des ruptures du motif projeté. Par conséquent, il faut être en mesure de distinguer les ruptures qui sont créées par ces objets non cibles et celles qui sont réellement créées par l'objet cible. Pour cela, on peut comparer les portions de l'image du motif projeté à des gabarits afin de discriminer les portions qui correspondent à l'objet cible et celles qui ne correspondent à aucun des objets cibles recherchés. Une fois qu'au moins une des portions a été reconnue comme semblable à un des gabarits, il est possible de savoir quel objet cible est présent dans la zone d'intérêt puisque chaque gabarit correspond à un type d'objet cible.

Par exemple, dans le cas d'une détection de quai, chaque gabarit représente un type de quai possible.

La comparaison de chaque portion de l'image du motif projeté aux gabarits peut avoir lieu :
- en comparant les coordonnées géométriques de chaque portion à celles des gabarits ;
- en superposant chaque portion du motif aux gabarits ;
- en utilisant un gabarit en forme de filtre qui ne sélectionne que les portions qui entrent dans le cadre du filtre.

De manière tout particulièrement avantageuse, le motif projeté est composé d'au moins une ligne lumineuse. Cette ligne lumineuse peut être continue ou discontinue. Les moyens de projection sont de préférence agencés de telle sorte que toute arête sécante à cette ligne lumineuse provoque une rupture dans cette ligne lumineuse qui est alors séparée en deux segments non alignés entre eux.

De manière tout particulièrement avantageuse, les moyens de projection sont agencés de telle sorte que le motif projeté sur un plan sécant avec le faisceau lumineux soit composé de N lignes lumineuses, qui peuvent être parallèles entre elles, N étant un nombre entier non nul, préférablement inférieur à 5, chaque ligne lumineuse étant séparée en deux segments distincts lorsqu'elle rencontre une arête. De manière particulièrement préférentielle, le faisceau lumineux peut être tel que le motif projeté sur un plan sécant avec le faisceau soit composé de 3 à 5 lignes lumineuses, ce qui permet de vérifier que les ruptures de lignes observées sont bien dues à l'objet cible recherché et non pas à un défaut dans la zone d'intérêt. Par rupture de la ligne lumineuse, on entend une séparation de la ligne lumineuse en deux segments non alignés entre eux. Naturellement, les moyens d'acquisition doivent être disposés de manière à ne pas être alignés avec les faisceaux lumineux.

Selon un mode de réalisation préférentiel, chaque ligne lumineuse projetée est une ligne droite, mais on peut également envisager de projeter des lignes courbes sans sortir du cadre de l'invention. De manière plus générale, on peut également envisager que le faisceau lumineux projette une surface, dont les déformations à la rencontre d'une arête sont caractéristiques.

Selon un mode de réalisation préférentiel de l'invention, les moyens de projection sont constitués d'au moins un laser.

Le faisceau peut projeter l'image projetée en continu, sous forme d'impulsions ou par balayage, de préférence à une fréquence suffisante pour que la mesure ne soit pas perturbée par d'éventuelles modifications dans le champ couvert par le faisceau.

De manière préférentielle, les moyens d'acquisition comportent une caméra.

De manière préférentielle, la caméra photographie la zone d'intérêt sous un angle tel que les ruptures du motif projeté sont visibles sur la photographie prise.

De manière particulièrement avantageuse, l'image capturée par la caméra est cadrée de façon à distinguer les portions et les ruptures du motif projeté.

En outre, l'image du motif projeté réalisée par les moyens d'acquisition est de préférence cadrée de façon à ne visualiser que la zone dans lequel l'objet cible recherché pourrait se trouver de façon à effectuer une première sélection entre les ruptures créées par l'objet cible recherché et celles créées par des objets non cible.

Avantageusement, le moyen de détection selon l'invention comporte en outre des moyens d'alerte aptes à envoyer une alerte lorsqu'une arête a été détectée et/ou qu'une des portions de l'image du motif projeté est identique à un des gabarits.

Avantageusement, le système de détection selon l'invention comprend en outre des moyens de calcul aptes à calculer la position géométrique dans l'espace de l'arête par triangulation.

Selon un mode de réalisation, l'image du motif projeté est rectangulaire et la position de l'arête est calculée en calculant la distance entre au moins un bord de l'image et la rupture représentative de l'arête, sachant que la position des bords de l'image a été calculée au préalable lors d'un étalonnage.

Suivant un autre mode de réalisation, la position de l'arête est calculée entre calculant la distance entre une référence ou un gabarit et la rupture représentative de l'arête, la position du gabarit ayant été déterminée lors d'un étalonnage.

L'invention concerne tout particulièrement un véhicule de transport en commun comportant un système de détection selon l'une quelconque des revendications précédentes.

Avantageusement, le véhicule de transport en commun selon l'invention comporte une paroi latérale s'étendant suivant direction longitudinale, les moyens de projection sont agencés de telle sorte que la direction de projection soit sécante à la direction longitudinale.

De manière tout particulièrement avantageuse, les moyens de projection sont disposés en haut du véhicule de transport en commun afin d'éviter leur dégradation. Dans ce cas, le faisceau lumineux est de préférence dirigé vers le sol.

Avantageusement, la paroi latérale du véhicule de transport en commun présente une porte, les moyens de projection et les moyens d'acquisition étant disposés de part et d'autre de la porte, ou au-dessus de celle-ci.

Avantageusement, le véhicule de transport en commun est un véhicule ferroviaire, de préférence un train.

De manière très préférentielle, les objets cibles recherchés sont des quais et les gabarits en mémoire correspondent aux différents types de quai.

L'invention concerne également un procédé de détection d'un objet cible dans une zone d'intérêt située autour d'un véhicule de transport en commun, l'objet cible comportant au moins une arête, le procédé de détection comportant les étapes suivantes:
- on projette au moins un faisceau lumineux suivant une direction de projection, le faisceau lumineux décrivant un motif projeté lorsque le faisceau lumineux rencontre une surface sans arête ;
- on acquiert une image du motif projeté depuis au moins un point de vue non aligné avec la direction de projection et de telle sorte que le motif projeté présente au moins une rupture séparant le motif projeté en au moins deux portions lorsque le faisceau lumineux rencontre une arête ;
- on compare l'image du motif projeté à des gabarits ;
- on en déduit la présence ou l'absence de l'objet cible dans la zone d'intérêt.

On peut en outre prévoir une procédure d'étalonnage comportant les étapes suivantes :
- on dispose dans le faisceau lumineux une surface plane horizontale à une première hauteur donnée,
- on acquiert une image du motif projeté du faisceau lumineux rencontrant la surface plane et on mémorise ladite image en tant que l'un premier desdits gabarits ;
- on répète les deux étapes précédentes pour au moins une deuxième hauteur et un deuxième desdits gabarits.

On construit ainsi pas à pas un ensemble de lignes de niveaux. Ces lignes de niveaux peuvent être caractéristiques des objets cibles recherchés. Elles peuvent par exemple être choisies pour encadrer les cotes maximales et minimales caractéristiques du ou des objets cibles.

Avantageusement, la surface plane peut être matérialisée par une cible qui peut également comporter une arête, disposée dans le faisceau lumineux. On a alors avantage à acquérir une image du motif projeté du faisceau lumineux rencontrant la surface plane et l'arête et à mémoriser l'image en tant que l'un premier desdits gabarits, ceci pour chaque hauteur. On construit ainsi pas à pas un ensemble de lignes de niveaux et d'arêtes, qui peuvent soit être équiréparties pour couvrir l'ensemble de la plage de mesure, soit être caractéristiques des objets cibles recherchés et être par exemple choisies pour encadrer les cotes maximales et minimales caractéristiques du ou des objets cibles.

Avantageusement, le procédé selon l'invention comporte en outre une étape de détermination du type d'objet cible présent en fonction du résultat de la comparaison de l'image du motif projeté au(x) gabarit(s).

En particulier, si les gabarits sont constitués par des lignes de niveaux, il suffit de superposer l'image du motif projeté avec les gabarits constitués par les lignes de niveaux, de détecter les ruptures du motif projetés dans l'image du motif projeté et de déterminer où se situent ces ruptures par rapport au réseau de lignes de niveaux.

Selon un mode de réalisation de l'invention, on compare chaque portion de l'image du motif projeté aux gabarits.

Le motif projeté est de préférence composé d'une ou plusieurs lignes droites parallèles, de préférence entre trois et cinq lignes droites parallèles.

Avantageusement, le procédé comporte en outre une étape de calcul de la position de l'arête par triangulation. Le procédé selon l'invention est particulièrement avantageux en ce qu'il permet d'avoir une précision de mesure de 5 mm sur la position du nez de quai dans l'espace lorsqu'il est utilisé pour détecter et localiser un nez de quai.

Avantageusement, le procédé selon l'invention comprend en outre les étapes suivantes :
- on compare les portions de l'image du motif projeté avec une première série de gabarits permettant de sélectionner les portions de l'image du motif projeté qui ont une position pouvant correspondre à l'objet cible;
- on compare les portions de l'image du motif projeté avec une deuxième série de gabarits permettant de sélectionner les portions de l'image du motif projeté qui ont des dimensions pouvant correspondre à l'objet cible.

L'invention concerne également l'utilisation du procédé et/ou du système selon l'invention pour détecter un quai en face d'une porte de véhicule ferroviaire.

Dans ce cas, les gabarits utilisés correspondent aux différents types de quais qui peuvent se trouver en face d'un véhicule ferroviaire.

L'invention concerne également l'utilisation du procédé et/ou du système selon l'invention pour calculer la hauteur d'un nez de quai par rapport à un seuil de véhicule ferroviaire.

Dans ce cas, une fois qu'une portion du motif est identifiée comme représentant un quai, le procédé selon l'invention comporte une étape de localisation de la représentation du nez de quai dans l'image du motif projeté. Lorsque le motif projeté est une ligne droite continue, un quai est représenté par un segment dans l'image du motif projeté et l'extrémité du segment qui est du côté du véhicule ferroviaire est alors identifiée comme représentant le nez de quai dans l'image du motif projeté.

Par ailleurs, l'image du motif projeté est de préférence un rectangle présentant un bord supérieur. Selon un mode de réalisation, le procédé selon l'invention comporte alors une étape de mesure de la distance D1 entre l'extrémité du segment et le bord supérieur de l'image, ce qui permet de connaître, par triangulation, la hauteur du nez de quai. Lorsque la hauteur du nez de quai est comprise entre deux hauteurs seuils, le procédé selon l'invention comporte en outre une étape d'autorisation de sortie d'un marchepied et/ou d'un comble-lacune.

Selon un autre mode de réalisation, on fait en sorte qu'une cible ayant servi de gabarit soit toujours présente sur l'image. En particulier, on peut faire en sorte que le seuil de porte, élément fixe faisant saillie de la paroi du véhicule ferroviaire, soit toujours dans le champ d'acquisition des moyens d'acquisition. On peut alors mesurer les distances par rapport à ce seuil pris comme référence.

L'invention concerne également l'utilisation du procédé et/ou du système selon l'invention pour calculer l'écartement latéral entre un nez de quai et le seuil d'accès d'un véhicule ferroviaire.

Dans ce cas, une fois qu'une portion de l'image du motif projeté est identifiée comme représentant un quai, le procédé selon l'invention comporte une étape de localisation de la représentation du nez de quai dans l'image du motif projeté. Lorsque le motif projeté est une ligne droite continue, un quai est représenté par un segment dans l'image du motif projeté et l'extrémité du segment qui est du côté du véhicule ferroviaire est alors identifiée comme représentant le nez de quai dans l'image du motif projeté.

Par ailleurs, l'image du motif projeté est de préférence un rectangle présentant un bord latéral du côté du seuil du véhicule ferroviaire.

Le procédé selon l'invention comporte alors une étape de mesure de la distance D2 entre l'extrémité du segment et le bord latéral de l'image, ce qui permet de connaître, par triangulation, la distance entre le nez de quai et le seuil d'accès du véhicule. Lorsque la distance entre le nez de quai et le seuil du véhicule est comprise entre deux écartements seuils, le procédé selon l'invention comporte en outre une étape d'autorisation de sortie d'un comble lacune et/ou d'un marche pied. On peut également choisir pour référence le seuil de porte, et déterminer la distance par rapport à ce seuil.

La distance de laquelle le comble lacune est sorti peut également être réglée en fonction de l'écartement entre le nez de quai et le seuil du véhicule.

Selon un mode de réalisation de l'invention, la sortie du comble-lacune peut également être conditionné par la présence ou non d'objets entre le seuil du véhicule ferroviaire et le nez de quai.

### BREVE DESCRIPTION DES FIGURES

D'autres caractéristiques et avantages de l'invention ressortiront à la lecture de la description qui suit, en référence aux figures annexées, qui illustrent :
- la figure 1, une représentation schématique en perspective d'un système de détection selon un premier mode de réalisation de l'invention ;
- la figure 2, une photographie d'un faisceau laser projeté par le système de détection de la figure 1 ;
- la figure 3, une image d'un motif projeté par le système de détection de la figure 1 ;
- les figures 4 à 14, l'image d'un motif projeté superposée à différents gabarits ;
- la figure 15, une représentation schématique en perspective d'un système de détection selon un autre mode de réalisation de l'invention ;
- les figures 16 à 19, une représentation schématique de quatre étapes successives d'une procédure d'étalonnage ;

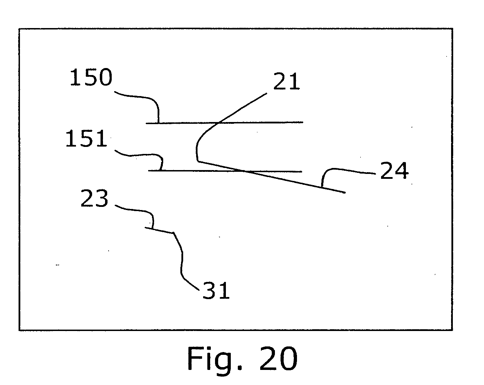

- la figure 20, une illustration d'une image d'un motif projeté superposée au gabarits constitués suivant la procédure d'étalonnage des figures 17 à 20 ;
- les figures 21 A à 21D, une illustration d'une séquence d'arrivée en gare d'un véhicule ferroviaire, mettant en oeuvre un ou plusieurs systèmes de détection selon la figure 1 pour détecter la présence d'un quai ;
- la figure 22, une illustration d'un mode dégradé de détection de présence d'un quai.

Pour plus de clarté, les éléments identiques ou similaires sont repérés par des signes de référence identiques sur l'ensemble des figures.

### DESCRIPTION DETAILLEE D'UN MODE DE REALISATION

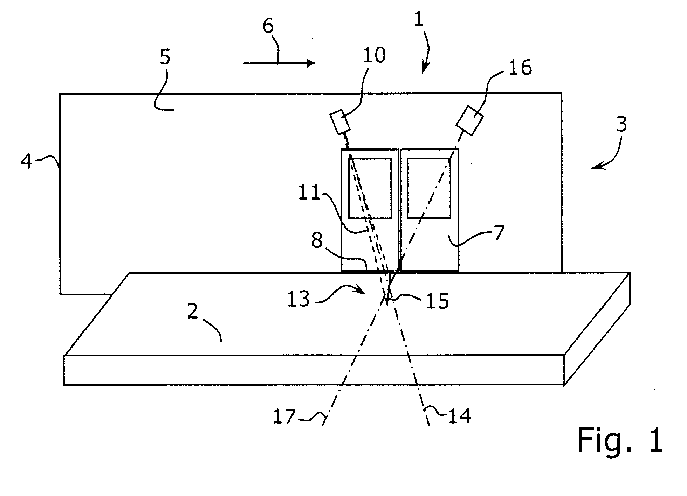

Le système de détection 1 représenté sur la figure 1 est fixé à un véhicule de transport en commun 3, en l'occurrence un véhicule ferroviaire à une ou plusieurs voitures 4. Chaque voiture 4 comporte une paroi latérale 5 qui s'étend suivant une direction longitudinale 6 du véhicule 3. La paroi latérale 5 présente une porte d'accès 7 à la voiture et un seuil d'accès 8.

Le véhicule 3 comporte un comble lacune escamotable entre une position rétractée dans laquelle le comble lacune est entièrement contenu sous le seuil d'accès de la porte et une position déployée dans laquelle le comble lacune réalise la jointure entre le seuil d'accès 8 et un quai de gare 2.

Le système de détection 1 selon l'invention permet de détecter un quai 2 de gare en face du seuil d'accès 8, et plus précisément, le système de détection permet de détecter la présence du nez de quai, c'est-à-dire l'arête supérieure du rebord du quai, ainsi que sa position dans l'espace au moins en hauteur et de préférence également en distance latérale par rapport au seuil d'accès 8.

Le système de détection 1 selon l'invention comporte des moyens de projection 10 d'au moins un faisceau lumineux 11. Les moyens de projections 10 sont constitués ici par un laser qui émet et projette un faisceau laser dans une zone d'intérêt 13 suivant une direction de projection 14.

Le faisceau laser 11 est ici une nappe plane qui constitue, lorsqu'elle est projetée sur un objet cible dans la zone d'intérêt 13, une ligne continue ou brisée qui constitue un motif projeté 15.

Les moyens de projection 10 sont fixés à la paroi latérale 5 du véhicule 4, d'un côté de la porte 7 et au-dessus de celle-ci. Les moyens de projection 10 sont fixés en hauteur de façon à éviter les dégradations.

La zone d'intérêt 13 se situe sensiblement au niveau de la porte 7 du véhicule sur une hauteur comprise entre le niveau du sol et une altitude au moins égale à celle du seuil d'accès 8.

Le système de détection selon l'invention comporte en outre des moyens d'acquisition 16 qui sont constitués ici par une caméra présentant une direction d'observation 17 centrée sur la zone d'intérêt.

Les moyens d'acquisition 16 sont agencés de manière à pouvoir saisir une image de la zone d'intérêt 13 dans laquelle pourrait se trouver un quai depuis un point de vue constitué par l'objectif de la caméra.

Les moyens d'acquisition 16 sont décalés angulairement par rapport aux moyens de projection 10 et par rapport à la direction de projection 14, de sorte que les moyens d'acquisition 16, les moyens de projection 10 et la zone visualisée par les moyens d'acquisition 16 et visée par les moyens de projection 10 soient situés sur les sommets d'un triangle, l'angle entre la direction de projection et la direction d'observation, mesuré au niveau de la zone visualisée étant de préférence proche de 90°, mais en pratique de l'ordre de 30 à 50° du fait des contraintes d'installation sur le véhicule, les angles inférieurs à 30° n'étant pas conseillés.

Les moyens d'acquisition 16 sont positionnés en hauteur de manière à éviter les dégradations. Lorsque le véhicule est équipé d'un système de rétrovision, les moyens d'acquisition sont de préférence placés dans le même boîtier que le système de rétrovision et peuvent ne faire qu'un avec celui-ci. Les moyens de projection 10 et les moyens d'acquisition 16 sont de préférence disposés de part et d'autre de la porte 7 et/ou au-dessus de celle-ci.

Les moyens d'acquisition sont agencés de manière à détecter une rupture de l'image du motif projeté 15.

Le système de détection selon l'invention comporte également une mémoire dans laquelle sont stockés plusieurs séries de gabarits comme cela sera expliqué plus en détail dans la suite.

Le système de détection selon l'invention comporte également des moyens de comparaison de l'image du motif projeté au(x) gabarit(s) et de détermination de la présence ou de l'absence dudit objet en fonction de la comparaison.

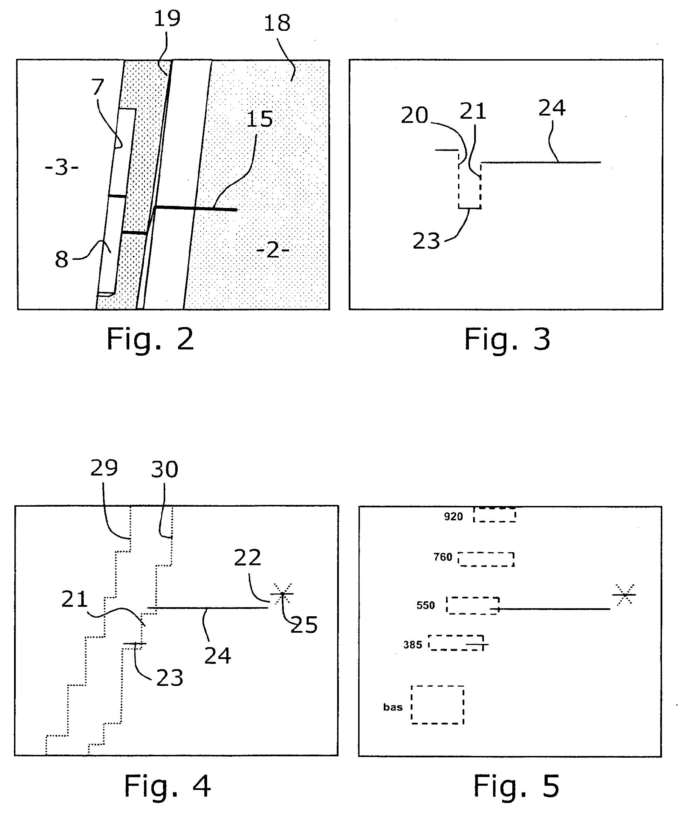

Le fonctionnement du système de détection décrit ci-dessus et le procédé de détection d'un quai selon l'invention sera maintenant expliqué plus en détail en référence aux figures 2 à 15.

L'image représentée sur la figure 2 est celle obtenue par la caméra 16, lorsque les moyens de projection 10 envoient un faisceau lumineux suivant la direction de projection 14 dans une zone d'intérêt 13 où se trouve la surface plane horizontale 18 d'un quai 2 ainsi que le seuil de porte 8.

Le faisceau lumineux 11 projeté par le laser 10 forme un motif projeté 15 sur les surfaces qu'il rencontre. L'image de ce motif vue par la caméra, présente des ruptures.

L'image du motif projeté 15, extraite de l'image de la figure 2, est représentée sur la figure 3. Elle est constituée par une suite de segments en l'espèce un premier segment 20 correspondant au seuil de porte 8, un deuxième segment court 23 correspondant au ballast et un troisième segment 24 correspondant à la projection du faisceau sur la surface plane 18 du quai 2. L'image du motif projeté présente donc des ruptures correspondant aux extrémités des segments 23, 24, 25, l'une de ces ruptures 21 correspondant à l'arête 19 du nez du quai 2.

On comprend que les moyens de projection sont agencés de manière à ce que le faisceau lumineux forme sur chaque surface plane sensiblement horizontale un segment droit sensiblement horizontal et de façon à ce que, lorsque le faisceau lumineux rencontre une arête présentant un angle à 90° entre une surface sensiblement horizontale et une surface sensiblement verticale, le faisceau lumineux soit rompu au niveau de l'arête.

Les moyens d'acquisition 16 sont agencés de manière à saisir une image du motif projeté sur la zone dans laquelle on recherche un quai.

Les moyens d'acquisition 16 sont agencés de manière à distinguer les différentes portions de l'image du motif projeté, ainsi que les différentes ruptures. Il faut pour cela que les moyens d'acquisition permettent d'observer le motif projeté depuis une direction non confondue avec la direction de projection. Idéalement, la direction d'observation 17 doit présenter un angle de l'ordre de 90° avec la direction de projection 14. En pratique, d'excellentes mesures sont obtenues avec des angles compris entre 60° et 120°, et de préférence entre 70° et 110°. Lorsque les contraintes d'installation ne permettent pas d'angles si important, on peut toutefois obtenir des résultats exploitables avec des angles plus faibles, jusqu'à 30°.

Dans un mode de réalisation préférentiel, les moyens d'acquisition sont agencés de manière à pouvoir prendre une photographie du motif projeté sur la zone d'intérêt et de manière à ce qu'une ligne horizontale sur une surface plane soit représentée sur la photographie par un segment horizontal.

Les figures 4 à 9 illustrent différentes étapes d'analyse de l'image 40 d'un motif projeté dans une hypothèse où se trouve, sur le quai 18, un objet tel qu'une valise, entrant dans le champ de projection du laser 10 et dans le champ de la caméra 16.

Comme on peut le voir sur la figure 2, l'image du motif projeté comporte suivant cette hypothèse un segment 23 correspondant au ballast, un segment 24 correspondant à la surface plane du quai et un segment 25 correspondant à l'objet posé sur le quai (on se place ici dans une hypothèse où le seuil de porte 8 n'est pas saillant). On notera 21 et 22 les deux ruptures du motifs de part et d'autre du segment 24 correspondant au quai 2

Une fois l'image du motif projeté enregistrée par les moyens d'acquisition, on cherche dans un premier temps à savoir si une des portions correspond à l'objet cible, c'est-à-dire dans le cas présent au quai. En effet, des portions peuvent correspondre à des objets non cibles comme par exemple des câbles, des personnes présentes sur le quai, des bagages...

Ainsi, afin de savoir si une des portions 23, 24 et 25 peut correspondre à un quai, on compare l'image du motif projeté à plusieurs séries de gabarits.

Comme on peut le voir sur la figure 4, on superpose dans un premier temps une première série de gabarits 29, 30 à l'image du motif projeté de manière à voir si une des portions présente une position qui pourrait correspondre à un quai. Lors de cette étape de comparaison, une marge d'erreur est autorisée afin de détecter un quai même si celui-ci est irrégulier ou présente des défauts.

Suite à cette étape de comparaison, les portions 23 et 24 sont sélectionnées car elles présentent des positions dans l'image qui pourraient correspondre à un quai, tandis que la portion 25 est rejetée car elle est trop éloignée pour correspondre à un quai.

Chaque gabarit représente un type de quai. Ainsi lorsqu'une portion correspond à un gabarit, on sait quel type de quai représente cette portion.

Dans le cas présent, on a donc deux portions sélectionnées: une portion 23 qui pourrait correspondre à un quai de type 385 et une portion 24 qui pourrait correspondre à un quai de type 550 comme représenté sur la figure 5.

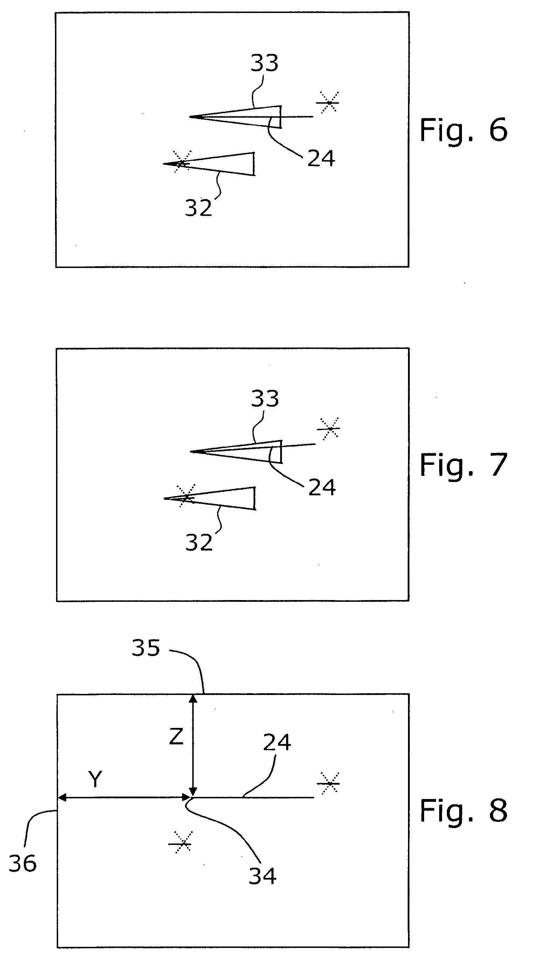

En référence à la figure 6, on compare ensuite les portions 23, 24 restantes à une deuxième série de gabarits permettant de savoir si les dimensions des portions sont telles que les portions pourraient correspondre à un quai. Les gabarits 32, 33 de cette deuxième série de gabarits sont de forme triangulaire afin de tenir compte d'un éventuel dévers de la voie, comme représenté sur la figure 7. Plus précisément, chaque gabarit forme un triangle isocèle dont le sommet est dirigé vers le train et dont les deux côtés égaux sont disposés de part et d'autre d'une ligne horizontale.

Seules les portions qui dépassent de la base de ces gabarits sont sélectionnées car leur longueur est supérieure à une longueur seuil en dessous de laquelle la portion sélectionnée ne peut pas représenter un quai.

Si aucune portion n'est sélectionnée à la fin des étapes de comparaison entre les portions et les gabarits, un signal d'absence de quai est envoyé et ni le comble-lacune, ni le marchepied ne sont déployés.

Dans le cas présent, à l'issue de cette étape de comparaison, la portion 24 est sélectionnée et elle est identifiée comme représentant un quai.

En outre, en identifiant le gabarit superposable à cette portion, on connaît le type de quai qui se trouve en face du train.

Le nez de quai est identifié comme étant représenté par l'extrémité 34 du segment 27 qui se trouve du côté du train.

Le procédé selon l'invention comporte ensuite une série d'étapes qui visent à connaître précisément la position du nez de quai par rapport au seuil d'accès du train.

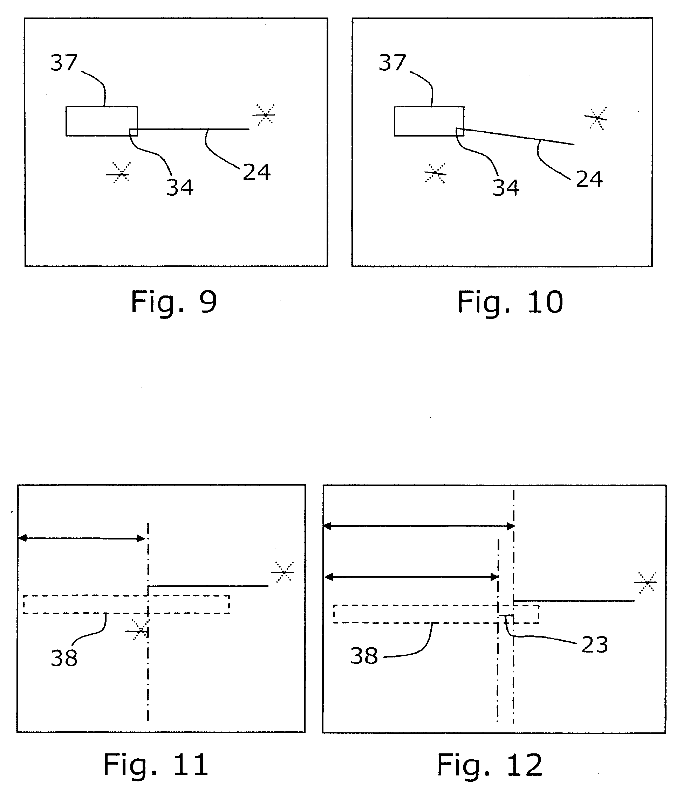

Pour cela, on mesure la distance Z entre l'extrémité 34 du segment 24 et le bord supérieur 35 de l'image et on en déduit la hauteur H du nez de quai par rapport au seuil d'accès au train par triangulation, comme illustré sur la figure 9.

De même, on mesure la distance Y entre l'extrémité 34 du segment 24 et le bord latéral 36 de l'image et on remonte à l'écartement E entre le nez de quai et le seuil d'accès au train par triangulation.

Ce procédé de mesure permet de connaître de manière précise la position du nez de quai par rapport au seuil.

On compare ensuite l'écartement E et la hauteur H du nez de quai à des valeurs seuils supérieures et inférieures afin de vérifier si la position du nez de quai est telle qu'un marchepied peut être sorti et/ou qu'un comble lacune peut être sorti.

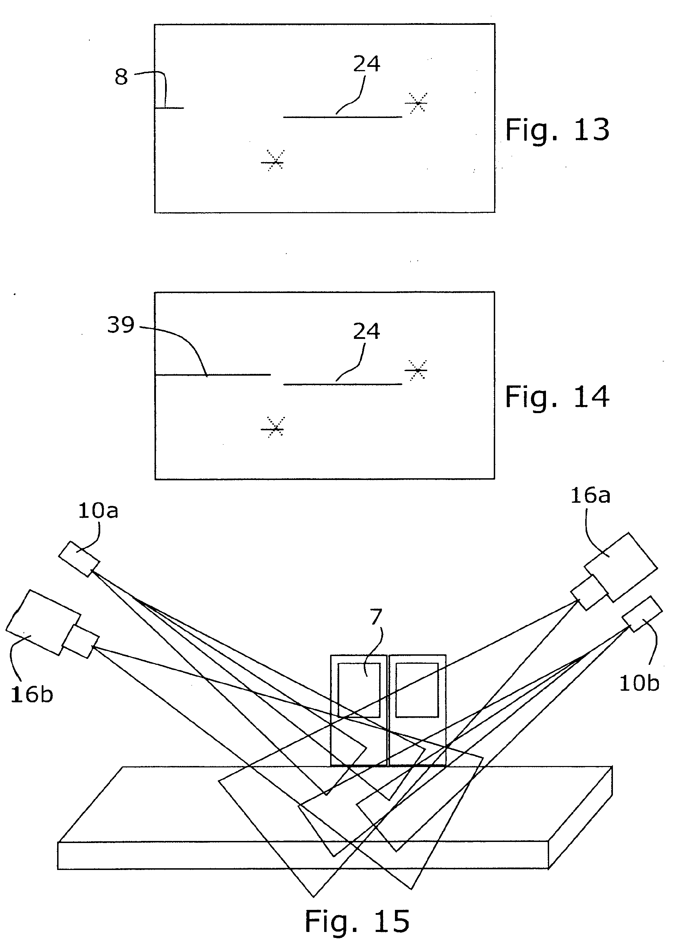

Les figures 13 et 14 illustrent l'étalonnage du système de détection selon l'invention, permettant de connaître la position des bords de l'image saisie par les moyens d'acquisition par rapport au seuil d'accès au train.

En effet, dans la mesure où la position du nez de quai est calculée par rapport aux bords de l'image, il est nécessaire, pour connaître la position du nez de quai par rapport au seuil d'accès au train, d'étalonner le système afin de connaître la position des bords de l'image par rapport au seuil d'accès au train. Pour cela, on se repère soit par rapport au seuil de porte 8 s'il est visible sur l'image prise par la caméra (comme représenté sur la figure 13) soit par rapport à l'extrémité libre du comble lacune 39 lorsqu'il est déployé (comme représenté sur la figure 14).

Le système selon l'invention comprend également des moyens d'autorisation de sortie du marchepied et/ou du comble-lacune en fonction du résultat de la comparaison entre l'écartement E et la hauteur H du nez de quai et les valeurs seuils.

Les sorties du marchepied et/ou du comble-lacune peuvent également être conditionnées par la détection d'un obstacle comme représenté sur les figures 11 et 12. En l'absence d'obstacle (sur la figure 11), la sortie du comble-lacune ou du marchepied est autorisée en fonction de la distance entre la rupture représentative du nez de quai et la référence constituée par le bord de l'écran. En présence d'un obstacle tel qu'une goulotte de câble entre le quai et le véhicule, correspondant à l'image du motif projeté 23, on superpose un gabarit à l'image du motif projeté et si l'image du motif projeté de l'obstacle 23 est détecté dans l'espace défini par ce gabarit, on peut :
- soit mesurer les dimensions de cet obstacle et vérifier que les dispositifs mobiles (comble-lacune, marchepied) peuvent être déployés sans heurter cet obstacle mobile ;
- soit interdire la sortie des dispositifs mobiles ;
- soit calculer de quelle distance les dispositifs mobiles peuvent être sortis au vu de l'obstacle et les sortir en conséquence.

Les figures 9 et 10 représentent une solution alternative pour savoir si les dispositifs mobiles peuvent être sortis.

Au lieu de mesurer la position précise du nez de quai (ou en complément de cette mesure), le procédé peut comprendre une étape au cours de laquelle un gabarit 37 est superposé à l'image du motif projeté. Ce gabarit 37 définit la zone dans laquelle l'extrémité 34 (qui représente le nez de quai) doit se trouver pour qu'un des dispositifs mobiles (ou les deux) soit déployé. Ainsi, si l'extrémité 34 de la portion 24 se trouve dans la zone géométrique définie par le gabarit 37, un des dispositifs mobiles (ou les deux) est déployé. Dans le cas contraire, aucun des dispositifs mobiles n'est déployé.

Un seul gabarit 37 peut être utilisé pour autoriser le déploiement de tous les dispositifs mobiles. Alternativement, on peut utiliser autant de gabarits que de dispositifs mobiles à déployer.

Dans le procédé et le système de détection décrits précédemment, un seul faisceau laser est utilisé. Toutefois, on peut également envisager de projeter plusieurs faisceaux lasers parallèles ou non, grâce aux moyens de projection.

Ainsi, pour projeter plusieurs faisceaux lasers parallèles :
- les moyens de projection peuvent comporter un seul laser en sortie duquel on place des moyens optiques (lentilles, miroirs...) permettant de séparer le faisceau laser en plusieurs faisceaux et/ou
- les moyens de projection peuvent comporter plusieurs lasers qui projettent chacun un ou plusieurs faisceaux laser.

Le fait de projeter plusieurs faisceaux lasers parallèles permet de vérifier les résultats obtenus. En effet, si un défaut se trouve sur le chemin d'un des faisceaux lasers (par exemple une fissure ou un caillou), le fait d'avoir plusieurs faisceaux laser permettra de comparer les résultats obtenus et donc de détecter les résultats qui sont réellement représentatifs du quai et ceux qui sont fortuits.

La figure 15 représente un autre mode de réalisation de l'invention dans lequel deux systèmes de détection selon l'invention sont utilisés. Ainsi, l'ensemble formé par ces deux systèmes de détection comporte deux lasers 10a et 10b et deux caméras 16a et 16b.

Le laser 10a et la caméra 16a sont disposés de part et d'autres de la porte d'accès 7 au véhicule. De même le laser 10b et la caméra 16b sont disposés de part et d'autre de la porte 7 d'accès au véhicule. La caméra 16a est disposée pour enregistrer la forme du motif projeté par le laser 10a sur la zone dans laquelle pourrait se trouver un quai. La caméra 16b est disposée pour enregistrer la forme du motif projeté par le laser 10b sur la zone dans laquelle pourrait se trouver un quai.

Le fait d'utiliser plusieurs systèmes de détection selon l'invention permet de comparer les résultats obtenus et donc d'obtenir un résultat plus fiable.

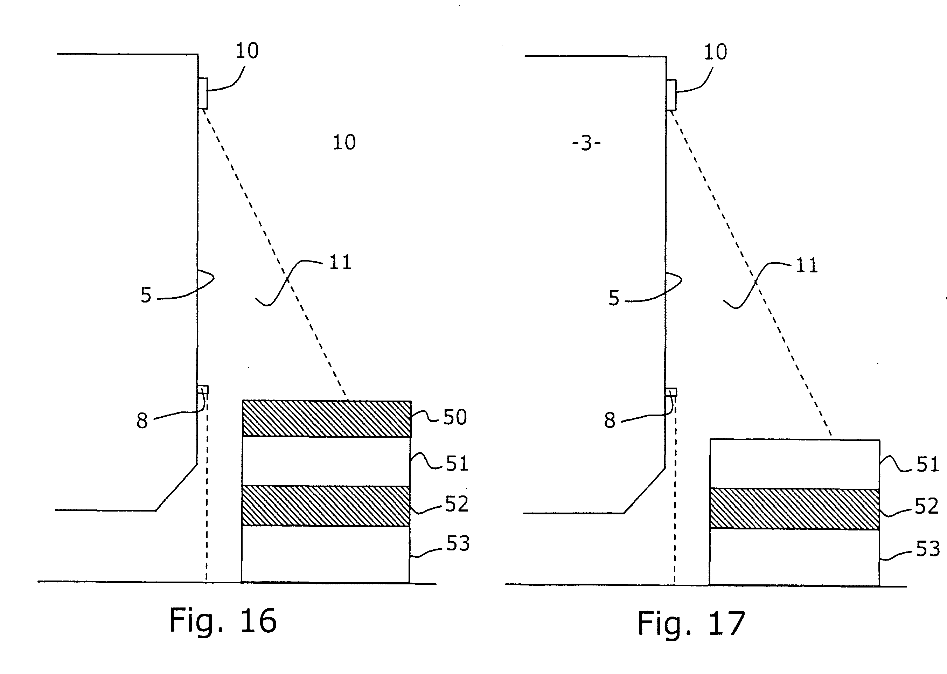

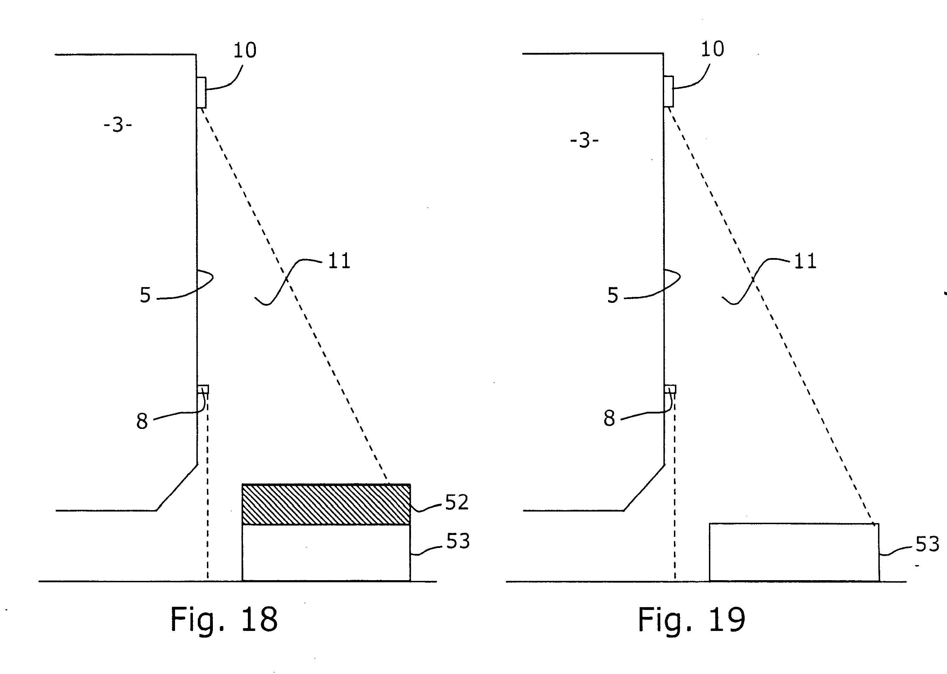

Une procédure d'étalonnage du dispositif de la figure 1 est illustrée sur les figures 16 à 19. On dispose successivement dans le champ du faisceau lumineux 11 une série de cibles d'étalonnage 50, 51, 52, 53, de manière à présenter dans le faisceau une surface plane horizontale à différentes hauteurs prédéterminées. Pour chaque hauteur, on acquière une image du motif projeté par le faisceau lumineux, qui est représentative d'une ligne de niveau et stockée comme gabarit. En l'espèce, les figures 17 et 18 correspondent respectivement aux altitudes maximale et minimale d'un nez de quai compatibles avec une ouverture de porte avec déploiement du comble-lacune et sans déploiement du marchepied. Les figures 18 et 19 correspondent aux altitudes maximale et minimale du nez de quai compatibles avec l'ouverture de porte après déploiement du marchepied.

De préférence, on fait en sorte que le seuil de porte 8 soit toujours dans le champ de la caméra et du faisceau lumineux. L'image projetée correspondante, un segment de droite, est un invariant sur toute les images, tant que la caméra et le laser restent positionnés de façon identique par rapport au véhicule.

De plus, on peut également, pour chacune des cibles d'étalonnage 50, 51, 52, 53, déterminer le positionnement de la rupture de l'image du motif projeté, correspondant au rebord de la cible d'étalonnage, ce qui permet un étalonnage de la distance par rapport au seuil de porte dans une direction parallèle à la ligne projetée. On peut ainsi en particulier prévoir de disposer le rebord de la cible successivement dans deux positions correspondant respectivement à un écartement maximal et un écartement minimal admissibles entre le quai et le véhicule compatible avec le déploiement d'un comble lacune. Par ailleurs, ont peut avantageusement inclure parmi les cibles d'étalonnage le seuil de porte du véhicule, et plus généralement tout élément saillant de la paroi du véhicule.

Après étalonnage, le dispositif est utilisé de la manière suivante. Pour détecter et reconnaître un objet cible placé dans le champ du faisceau lumineux, on acquière l'image du motif projeté du faisceau lumineux sur la surface de l'objet. On superpose l'image aux images stockées comme gabarits, formant les différentes lignes de niveau. On détermine par un traitement d'image approprié la présence et le positionnement des discontinuités 21, 31 du motif projeté et on détermine entre quelles lignes de niveau ces discontinuités se situent.

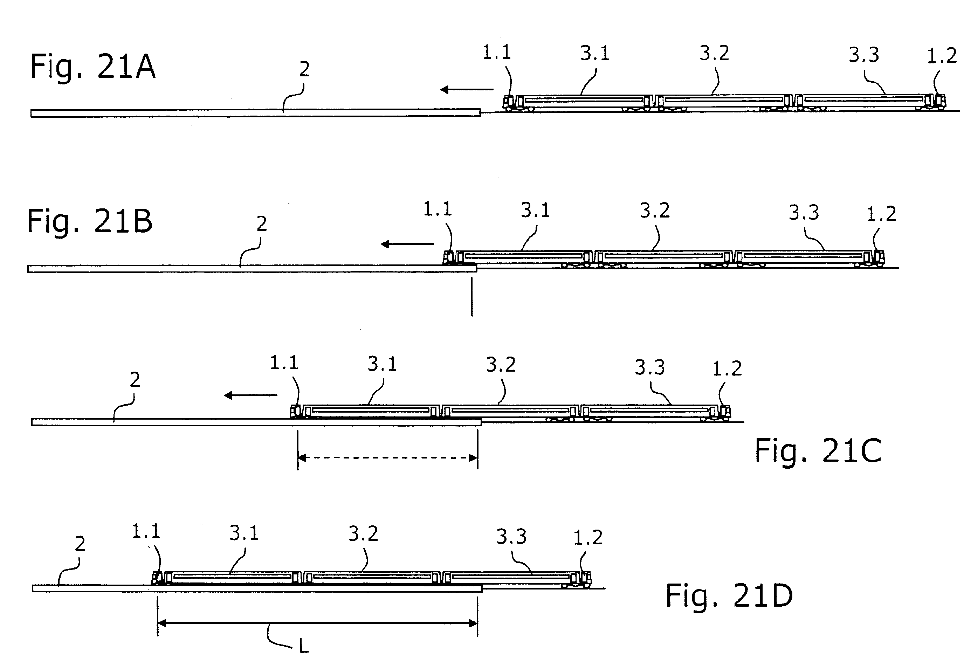

La procédure est illustrée pour la détection d'un nez de quai sur la figure 21. L'image du nez de quai présente un point de discontinuité 21, représentatif du nez de quai. En comparant le point 21 aux lignes de niveau 150 et 151 obtenues avec les cibles d'étalonnage 50 et 51 respectivement, on détermine si la discontinuité se situe à une hauteur compatible avec un nez de quai. Dans l'affirmative, on considère que le faisceau lumineux balaie effectivement un nez de quai.

Un traitement similaire peut être effectué pour comparer le positionnement du point de discontinuité 21 avec le positionnement des points de rupture mémorisés des cibles d'étalonnage, pour déterminer le positionnement du point de discontinuité 21 suivant une deuxième direction représentative de l'écartement entre le nez de quai et le véhicule.

On aura naturellement pris soin au préalable de vérifier que l'image projetée du seuil de porte se trouve bien à l'emplacement attendu sur l'image, pour valider que les conditions de mesure n'ont pas changé depuis l'étalonnage.

Le dispositif de détection décrit précédemment peut être utilisé en dynamique pour la détection de la longueur d'un quai en regard d'un véhicule ferroviaire. Les figures 21 A à 21 D illustrent une telle utilisation. En l'espèce, le véhicule ferroviaire 3, qui peut comporter plusieurs voitures 3.1, 3.2, 3.3, est équipé d'au moins un dispositif de détection tel que précédemment décrit, et le cas échéant d'une pluralités de tels dispositifs 1.1, 1.2 répartis sur la longueur du train. La procédure proposée est particulièrement utile lorsque le nombre de dispositifs de détection est inférieur au nombre de portes. Un premier dispositif de détection 1.1 est disposé en tête de train. Dans l'exemple, un deuxième dispositif 1.2 est disposé en queue de train. Le train circule de droite à gauche sur les figures, qui illustrent une entrée en gare. Sur la figure 21 A, avant l'entrée en gare, les dispositifs de détection du train 1.1, 1.2 sont activés. Dès que le dispositif de détection 1.1 en tête de train détecte la présence du quai, sur la figure 21 B, un compteur lié à un capteur de vitesse du train est activé. On mesure ainsi la distance parcourue L jusqu'à l'arrêt représenté sur la figure 21 D. A l'arrêt du train, si le dispositif de détection 1.2 disposé en queue de train n'a pas détecté la présence du quai 2, on se réfère à la distance L parcourue depuis la première détection par le dispositif situé en tête de train jusqu'à l'arrêt pour déterminer les portes qu'il est possible d'ouvrir, en l'occurrence dans l'exemple illustré : les portes des deux premières voitures 3.1, 3.2 ainsi que la porte avant de la dernière voiture 3.3.

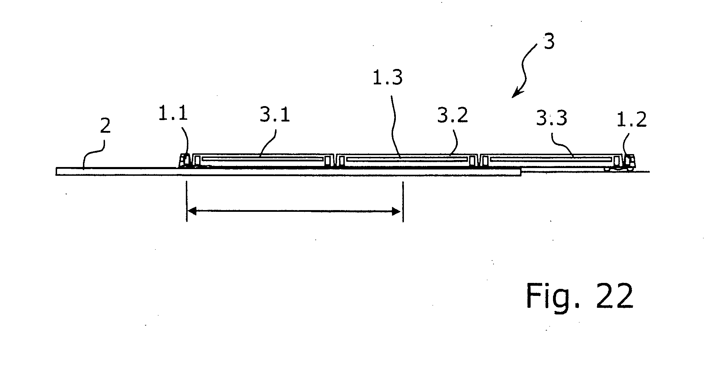

Il est naturellement préférable d'augmenter le nombre de dispositifs de détection, et de relier chacun d'eux à un compteur permettant de déterminer la distance parcourue par le train depuis la détection par le dispositif de détection jusqu'à l'arrêt. Une telle disposition permet également un fonctionnement en mode dégradé. Sur la figure 22 est représenté un tel véhicule disposant de trois dispositifs de détection 1.1, 1.2 et 1.3, deux aux extrémités et un au milieu de la rame. On suppose ici que le train 3 est à l'arrêt et qu'un défaut n'a pas rendu possible la mesure de la distance parcourue depuis la détection du quai par le détecteur 1.1 situé en tête de train jusqu'à l'arrêt. Dans ce cas, une décision d'ouverture des portes peut être prise sur base des signaux de détection de quai des détecteurs situé à l'avant 1.1 et au centre 1.3 : on ouvrira automatiquement les portes situés entre ces deux dispositifs de détection.

Naturellement l'invention n'est pas limitée aux modes de réalisation décrits ci-dessus. En particulier, toutes sortes d'objet cibles peuvent être détectés en bordure d'un véhicule ferroviaire, comme par exemple des bagages, des balises...

## Revendications

1. Système de détection d'un quai dans une zone d'intérêt située autour d'un véhicule ferroviaire de transport en commun, le quai comportant au moins une arête (19), le système de détection comportant :
- des moyens de projection (10) d'au moins un faisceau lumineux (11) dans la zone d'intérêt suivant au moins une direction de projection (14), les moyens de projection (10) étant agencés de telle sorte que le faisceau lumineux (11) décrive au moins un motif projeté (15) sur une surface lorsque le faisceau lumineux (11) rencontre une surface dans la zone d'intérêt ;
- des moyens d'acquisition (16) d'au moins une image (40) du motif projeté depuis au moins un point de vue non aligné avec la direction de projection et de telle sorte que l'image du motif projeté présente au moins une rupture (21, 22, 31) séparant l'image du motif projeté en au moins deux segments (20, 23, 24, 25) lorsque le faisceau lumineux (11) rencontre, dans la zone d'intérêt, une arête (19,) du nez du quai, le quai pouvant correspondre à un segment, les moyens d'acquisition (16) étant agencés pour détecter les segments et les ruptures de l'image du motif projeté ;
- au moins une mémoire dans laquelle sont stockés plusieurs gabarits associés au point de vue (29, 30, 32, 33, 37, 38) représentant chacun un type de quai et ayant des positions données;
- plusieurs cibles d'étalonnage associées aux gabarits
- des moyens de comparaison et de superposition des segments de l'image (40) du motif projeté aux gabarits et de détermination de la présence ou de l'absence du quai en fonction de la comparaison et de la superposition.

2. Système de détection selon la revendication 1, **caractérisé en ce que** les cibles d'étalonnage correspondent à des surfaces planes horizontales présentées dans le faisceau à différentes hauteurs prédéterminées pour réaliser une image du motif projeté représentative d'une ligne de niveau stockée comme gabarit.

3. Système de détection selon l'une des revendications 1 à 2, **caractérisé en ce que** les gabarits comprennent une première série de gabarits permettant de sélectionner les segments de l'image du motif projeté qui ont une position pouvant correspondre au quai et une deuxième série de gabarits permettant de sélectionner les segments de l'image du motif projeté qui ont des dimensions pouvant correspondre au quai.

4. Système de détection selon la revendication 3, **caractérisé en ce que** les gabarits de la deuxième série présentent une forme triangulaire isocèle afin de tenir compte d'un éventuel devers de la voie et seuls les segments qui dépassent de la base de ces gabarits sont sélectionnées.

5. Système de détection selon l'une des revendications 1 à 4, **caractérisé en ce qu'**un gabarit (37) définit la zone dans laquelle une extrémité de segment (34) se trouve pour qu'au moins un dispositif mobile du véhicule soit déployé, ce gabarit (37) permettant d'évaluer une distance latérale entre l'arête du nez du quai et un seuil d'accès.

6. Système de détection selon l'une des revendications 1 à 5, **caractérisé en ce que** les moyens de projection (10) et les moyens d'acquisition (16) sont agencés de telle sorte que l'image motif présente au moins une rupture séparant le motif projeté en au moins deux segments lorsque le faisceau lumineux rencontre une arête (19, 20) du nez du quai à l'intersection entre un plan sensiblement vertical et un plan sensiblement horizontal.

7. Système de détection selon l'une quelconque des revendications précédentes, **caractérisé en ce que** les moyens de comparaison permettent de comparer chaque segment (23, 24, 25) de l'image du motif projeté à au moins un gabarit.

8. Système de détection selon l'une quelconque des revendications précédentes, **caractérisé en ce que** les moyens de projection et les moyens d'acquisition sont agencés de telle sorte que l'image du motif projeté par le faisceau lumineux sur un plan sécant avec le faisceau lumineux est composé de N lignes lumineuses, N étant un nombre entier non nul, chaque ligne lumineuse étant séparée en deux segments (26, 27, 28) distincts lorsqu'elle rencontre une arête.

9. Système de détection selon l'une quelconque des revendications précédentes, **caractérisé en ce que** les moyens de projection (10) sont constitués d'au moins un laser (10, 10a, 10b).

10. Système de détection selon l'une quelconque des revendications précédentes, **caractérisé en ce que** les moyens d'acquisition (16) comportent une caméra (17, 17a, 17b).

11. Système de détection selon l'une quelconques des revendications précédentes, **caractérisé en ce qu'**il comporte en outre des moyens d'alerte aptes à envoyer une alerte lorsqu'une arête (19, 20) a été détectée et/ou qu'un des segments (23, 24, 25) du motif projeté est identique à un des gabarits.

12. Système de détection selon l'une quelconque des revendications précédentes, **caractérisé en ce qu'**il comprend en outre des moyens de calcul aptes à calculer la position géométrique de l'arête dans l'espace par triangulation.

13. Véhicule de transport en commun comportant un système de détection selon l'une quelconque des revendications précédentes.

14. Véhicule de transport en commun selon la revendication précédente, **caractérisé en ce qu'**il comporte une paroi latérale (5) s'étendant suivant une direction longitudinale (6), les moyens de projection (10) étant agencés de telle sorte que la direction de projection (14) soit sécante à la direction longitudinale.

15. Véhicule de transport en commun selon la revendication précédente, **caractérisé en ce que** la paroi latérale (5) présente une porte (7), les moyens de projection (10) et les moyens d'acquisition (16) étant disposés de part et d'autre de la porte (7) et/ou au-dessus de la porte (7).

16. Procédé de détection d'un quai dans une zone d'intérêt située autour d'un véhicule de transport en commun, le quai comportant au moins une arête (19, 20), le procédé de détection étant **caractérisé en ce qu'**il comporte les étapes suivantes :
- on projette dans la zone d'intérêt au moins un faisceau lumineux (11) suivant une direction de projection (14), le faisceau lumineux (11) décrivant un motif projeté lorsque le faisceau lumineux rencontre une surface dans la zone d'intérêt ;
- on acquiert une image (40) du motif projeté depuis au moins un point de vue non aligné avec la direction de projection et de telle sorte que le motif projeté présente au moins une rupture (21, 22, 31) séparant le motif projeté en au moins deux segments (23, 24, 25) lorsque le faisceau lumineux rencontre une arête (19, 20) du nez du quai dans la zone d'intérêt, le quai pouvant correspondre à un segment;
- on compare et on superpose les segments de l'image (40) du motif projeté à des gabarits (29, 30, 32, 33, 37, 38); les gabarits étant réalisés lors d'une procédure d'étalonnage par des cibles d'étalonnage, et correspondant à des types de quai et ayant des positions données;
- on en déduit la présence ou l'absence du quai dans la zone d'intérêt.

17. Procédé de détection selon la revendication précédente, **caractérisé en ce qu'**il comporte en outre une procédure d'étalonnage comportant les étapes suivantes :
- on dispose dans le faisceau lumineux une surface plane horizontale à une première hauteur donnée,
- on acquiert une image du motif projeté du faisceau lumineux rencontrant la surface plane et on mémorise ladite image en tant que l'un premier desdits gabarits ;
- on répète les deux étapes précédentes pour au moins une deuxième hauteur et un deuxième desdits gabarits.

18. Procédé de détection selon l'une quelconque des revendications 16 à 17, **caractérisé en ce que** le motif projeté par le faisceau lumineux sur une surface plane non alignée avec la direction de projection est composé d'une ou plusieurs lignes droites parallèles.

19. Procédé de détection selon la revendication précédente, **caractérisé en ce que** le motif projeté comprend entre trois et cinq lignes droites parallèles.

20. Procédé de détection selon l'une quelconque des revendications 16 à 19, **caractérisé en ce qu'**il comporte en outre une étape de calcul de la position de l'arête par triangulation.

21. Procédé de détection selon l'une quelconque des revendications 16 à 20, **caractérisé en ce que** qu'il comprend les étapes suivantes :
- on compare les segments de l'image du motif projeté avec une première série de gabarits permettant de sélectionner les segments de l'image du motif projeté qui ont une position pouvant correspondre au quai;
- on compare les segments de l'image du motif projeté avec une deuxième série de gabarits permettant de sélectionner les segments de l'image du motif projeté qui ont des dimensions pouvant correspondre au quai.

## Patentansprüche

1. System zur Erfassung eines Bahnsteigs in einem interessierenden Bereich, der um ein Eisenbahnfahrzeug für den öffentlichen Transport liegt, wobei der Bahnsteig mindestens eine Kante (19) umfasst, wobei das Erfassungssystem Folgendes umfasst:
- Mittel zum Projizieren (10) mindestens eines Lichtstrahls (11) in den interessierenden Bereich entlang mindestens einer Projektionsrichtung (14), wobei die Projektionsmittel (10) derart eingerichtet sind, dass der Lichtstrahl (11) mindestens ein projiziertes Muster (15) auf einer Oberfläche beschreibt, wenn der Lichtstrahl (11) eine Oberfläche in dem interessierenden Bereich antrifft,
- Mittel zum Erfassen (16) mindestens eines Bilds (40) des projizierten Musters ausgehend von mindestens einem Blickpunkt, der nicht mit der Projektionsrichtung ausgerichtet ist, und derart, dass das Bild des projizierten Musters mindestens einen Bruch (21, 22, 31) aufweist, der das Bild des projizierten Musters in mindestens zwei Segmente (20, 23, 24, 25) trennt, wenn der Lichtstrahl (11) in dem interessierenden Bereich eine Kante (19) des Bahnsteigvorsprungs antrifft, wobei der Bahnsteig einem Segment entsprechen kann, wobei die Erfassungsmittel (16) eingerichtet sind, um die Segmente und die Brüche des Bilds des projizierten Musters zu erfassen,
- mindestens einen Speicher, in dem mehrere Profile, die zu dem Blickpunkt (29, 30, 32, 33, 37, 38) gehören, die jeweils einen Bahnsteigtyp darstellen und gegebene Positionen haben, gespeichert sind,
- mehrere Eichziele, die zu den Profilen gehören,
- Mittel zum Vergleichen und Überlagern der Segmente des Bilds (40) des projizierten Musters mit/auf den Profilen und zum Bestimmen der Anwesenheit oder der Abwesenheit des Bahnsteigs in Abhängigkeit von dem Vergleich und der Überlagerung.

2. Erfassungssystem nach Anspruch 1, **dadurch gekennzeichnet, dass** die Eichziele horizontalen flachen Oberflächen entsprechen, die in dem Strahl an vorbestimmten unterschiedlichen Höhen präsentiert werden, um ein Bild des projizierten Musters, das für eine als Profil gespeicherte Niveaulinie repräsentativ ist, herzustellen.

3. Erfassungssystem nach einem der Ansprüche 1 bis 2, **dadurch gekennzeichnet, dass** die Profile eine erste Reihe von Profilen umfassen, die es erlaubt, die Segmente des Bilds des projizierten Musters, die eine Position haben, die dem Bahnsteig entsprechen kann, auszuwählen, und eine zweite Reihe von Profilen, die es erlaubt, die Segmente des Bilds des projizierten Musters, die Maße haben, die dem Bahnsteig entsprechen können, auszuwählen.

4. Erfassungssystem nach Anspruch 3, **dadurch gekennzeichnet, dass** die Profile der zweiten Reihe eine gleichschenkelige Dreiecksform aufweisen, um eine eventuelle Schräglage des Gleises zu berücksichtigen, und nur die Segmente, die über die Basis dieser Profile vorstehen, ausgewählt werden.

5. Erfassungssystem nach einem der Ansprüche 1 bis 4, **dadurch gekennzeichnet, dass** ein Profil (37) die Zone definiert, in der sich ein Segmentende (34) befindet, damit mindestens eine bewegliche Vorrichtung des Fahrzeugs ausgefahren wird, wobei dieses Profil (37) es erlaubt, eine seitliche Entfernung zwischen der Kante des Bahnsteigvorsprungs und einer Zugangsschwelle zu schätzen.

6. Erfassungssystem nach einem der Ansprüche 1 bis 5, **dadurch gekennzeichnet, dass** die Projektionsmittel (10) und die Erfassungsmittel (16) derart eingerichtet sind, dass das Bild des Musters mindestens einen Bruch aufweist, der das projizierte Muster in mindestens zwei Segmente teilt, wenn der Lichtstrahl eine Kante (19, 20) des Bahnsteigvorsprungs an der Schnittstelle zwischen einer im Wesentlichen vertikalen Ebene und einer im Wesentlichen horizontalen Ebene antrifft.

7. Erfassungssystem nach einem der vorhergehenden Ansprüche, **dadurch gekennzeichnet, dass** es die Vergleichsmittel erlauben, jedes Segment (23, 24, 25) des Bilds des projizierten Musters mit mindestens einem Profil zu vergleichen.

8. Erfassungssystem nach einem der vorhergehenden Ansprüche, **dadurch gekennzeichnet, dass** die Projektionsmittel und die Erfassungsmittel derart eingerichtet sind, dass das Bild des Musters, das von dem Lichtstrahl auf einer Schnittebene mit dem Lichtstrahl projiziert wird, aus N Leuchtlinien besteht, wobei N eine Ganzzahl nicht gleich null ist, wobei jede Leuchtlinie in zwei separate Segmente (26, 27, 28) getrennt wird, wenn sie eine Kante antrifft.

9. Erfassungssystem nach einem der vorhergehenden Ansprüche, **dadurch gekennzeichnet, dass** die Projektionsmittel (10) aus mindestens einem Laser (10, 10a, 10b) bestehen.

10. Erfassungssystem nach einem der vorhergehenden Ansprüche, **dadurch gekennzeichnet, dass** die Erfassungsmittel (16) eine Kamera (17, 17a, 17b) umfassen.

11. Erfassungssystem nach einem der vorhergehenden Ansprüche, **dadurch gekennzeichnet, dass** es außerdem Warnmittel umfasst, die geeignet sind, eine Warnung zu senden, wenn eine Kante (19, 20) erfasst wurde und/oder wenn eines der Segmente (23, 24, 25) des projizierten Musters mit einem der Profile identisch ist.

12. Erfassungssystem nach einem der vorhergehenden Ansprüche, **dadurch gekennzeichnet, dass** es außerdem Rechenmittel umfasst, die geeignet sind, die geometrische Position der Kante im Raum durch Triangulierung zu berechnen.

13. Öffentliches Transportfahrzeug, das ein Erfassungssystem nach einem der vorhergehenden Ansprüche umfasst.

14. Öffentliches Transportfahrzeug nach dem vorhergehenden Anspruch, **dadurch gekennzeichnet, dass** es eine Seitenwand (5) umfasst, die sich entlang einer Längsrichtung (6) erstreckt, wobei die Projektionsmittel (10) derart eingerichtet sind, dass die Projektionsrichtung (14) die Längsrichtung schneidet.

15. Öffentliches Transportfahrzeug nach dem vorhergehenden Anspruch, **dadurch gekennzeichnet, dass** die Seitenwand (5) eine Tür (7) aufweist, wobei die Projektionsmittel (10) und die Erfassungsmittel (16) zu beiden Seiten der Tür (7) und/oder oberhalb der Tür (7) angeordnet sind.

16. Verfahren zur Erfassung eines Bahnsteigs in einem interessierenden Bereich, der um ein öffentliches Transportfahrzeug liegt, wobei der Bahnsteig mindestens eine Kante (19, 20) umfasst, wobei das Erfassungsverfahren **dadurch gekennzeichnet ist, dass** es die folgenden Schritte umfasst:
- Projizieren in dem interessierenden Bereich mindestens eines Lichtstrahls (11) entlang einer Projektionsrichtung (14), wobei der Lichtstrahl (11) ein projiziertes Muster beschreibt, wenn der Lichtstrahl eine Oberfläche in dem interessierenden Bereich antrifft,
- Erfassen eines Bilds (40) des projizierten Musters ausgehend von mindestens einem Blickpunkt, der nicht mit der Projektionsrichtung ausgerichtet ist, und derart, dass das projizierte Muster mindestens einen Bruch (21, 22, 31) aufweist, der das projizierte Muster in mindestens zwei Segmente (23, 24, 25) trennt, wenn der Lichtstrahl eine Kante (19, 20) des Bahnsteigvorsprungs in dem interessierenden Bereich antrifft, wobei der Bahnsteig einem Segment entsprechen kann,
- Vergleichen und Überlagern der Segmente des Bilds (40) des projizierten Musters mit/auf Profilen (29, 30, 32, 33, 37, 38), wobei die Profile bei einer Eichprozedur durch Eichziele hergestellt werden und Bahnsteigtypen entsprechen und gegebene Positionen haben,
- Ableiten der Anwesenheit oder Abwesenheit des Bahnsteigs in dem interessierenden Bereich.

17. Erfassungsverfahren nach dem vorhergehenden Anspruch, **dadurch gekennzeichnet, dass** es außerdem eine Eichprozedur umfasst, die die folgenden Schritte umfasst:
- Anordnen in dem Lichtstrahl einer horizontalen flachen Oberfläche in einer ersten gegebenen Höhe,
- Erfassen eines Bilds des projizierten Musters des Lichtstrahls, der die flache Oberfläche antrifft, und Speichern des Bilds als ein erstes der Profile,
- Wiederholen der zwei vorhergehenden Schritte für mindestens eine zweite Höhe und ein zweites der Profile.

18. Erfassungsverfahren nach einem der Ansprüche 16 bis 17, **dadurch gekennzeichnet, dass** das von dem Lichtstrahl auf eine flache Oberfläche, die nicht mit der Projektionsrichtung ausgerichtet ist, projizierte Muster aus einer oder mehreren parallelen geraden Linien besteht.

19. Erfassungsverfahren nach dem vorhergehenden Anspruch, **dadurch gekennzeichnet, dass** das projizierte Muster zwischen drei und fünf parallele gerade Linien umfasst.

20. Erfassungsverfahren nach einem der Ansprüche 16 bis 19, **dadurch gekennzeichnet, dass** es außerdem einen Schritt zum Berechnen der Position der Kante durch Triangulierung umfasst.

21. Erfassungsverfahren nach einem der Ansprüche 16 bis 20, **dadurch gekennzeichnet, dass** es die folgenden Schritte umfasst:
- Vergleichen der Segmente des Bilds des projizierten Musters mit einer ersten Reihe von Profilen, die es erlaubt, die Segmente des Bilds des projizierten Musters, die eine Position haben, die dem Bahnsteig entsprechen kann, auszuwählen,
- Vergleichen der Segmente des Bilds des projizierten Musters mit einer zweiten Reihe von Profilen, die es erlaubt, die Segmente des Bilds des projizierten Musters, die Maße haben, die dem Bahnsteig entsprechen können, auszuwählen.

## Claims

1. System for detecting a platform in a zone of interest situated around a public railway transport vehicle, the platform comprising at least one arris (19), the detection system comprising:
- means of projection (10) of at least one light beam (11) in the zone of interest along at least one direction of projection (14), the projection means (10) being arranged in such a way that the light beam (11) describes at least one projected pattern (15) on a surface when the light beam (11) encounters a surface in the zone of interest;
- means of acquisition (16) of at least one image (40) of the projected pattern from at least one viewpoint not aligned with the direction of projection and in such a way that the image of the projected pattern exhibits at least one break (21, 22, 31) separating the image of the projected pattern into at least two segments (20, 23, 24, 25) when the light beam (11) encounters, in the zone of interest, an arris (19), of the coping of the platform, the platform being able to correspond to a segment, the acquisition means (16) being designed to detect the segments and the breaks of the image of the projected pattern;
- at least one memory in which are stored several templates associated with the viewpoint (29, 30, 32, 33, 37, 38) each representing a type of platform and having given positions;
- several calibration targets associated with the templates;
- means of comparison and of superposition of the segments of the image (40) of the projected pattern with the templates and of determination of the presence or the absence of the platform as a function of the comparison and of the superposition.

2. Detection system according to Claim 1, **characterized in that** the calibration targets correspond to horizontal plane surfaces presented in the beam at various predetermined heights so as to produce an image of the projected pattern, said image being representative of a level set stored as template.

3. Detection system according to one of Claims 1 to 2, **characterized in that** the templates comprise a first series of templates making it possible to select the segments of the image of the projected pattern which have a position that may correspond to the platform and a second series of templates making it possible to select the segments of the image of the projected pattern which have dimensions that may correspond to the platform.

4. Detection system according to Claim 3, **characterized in that** the templates of the second series exhibit an isosceles triangular shape so as to take account of a possible skew of the track and only the segments that overstep the base of these templates are selected.

5. Detection system according to one of Claims 1 to 4, **characterized in that** a template (37) defines the zone in which an end of segment (34) lies in order for at least one mobile device of the vehicle to be deployed, this template (37) making it possible to evaluate a lateral distance between the arris of the coping of the platform and an access threshold.

6. Detection system according to one of Claims 1 to 5, **characterized in that** the projection means (10) and the acquisition means (16) are arranged in such a way that the pattern image exhibits at least one break separating the projected pattern into at least two segments when the light beam encounters an arris (19, 20) of the coping of the platform at the intersection between a substantially vertical plane and a substantially horizontal plane.

7. Detection system according to any one of the preceding claims, **characterized in that** the comparison means make it possible to compare each segment (23, 24, 25) of the image of the projected pattern with at least one template.

8. Detection system according to any one of the preceding claims, **characterized in that** the projection means and the acquisition means are arranged in such a way that the image of the pattern projected by the light beam on a plane secant with the light beam is composed of N luminous lines, N being a non-zero integer number, each luminous line being separated into two distinct segments (26, 27, 28) when it encounters an arris.

9. Detection system according to any one of the preceding claims, **characterized in that** the projection means (10) consist of at least one laser (10, 10a, 10b).

10. Detection system according to any one of the preceding claims, **characterized in that** the acquisition means (16) comprise a camera (17, 17a, 17b).

11. Detection system according to any one of the preceding claims, **characterized in that** it furthermore comprises alert means able to dispatch an alert when an arris (19, 20) has been detected and/or when one of the segments (23, 24, 25) of the projected pattern is identical to one of the templates.

12. Detection system according to any one of the preceding claims, **characterized in that** it furthermore comprises calculation means able to calculate the geometric position of the arris in space by triangulation.

13. Public transport vehicle comprising a detection system according to any one of the preceding claims.

14. Public transport vehicle according to the preceding claim, **characterized in that** it comprises a lateral wall (5) extending in a longitudinal direction (6), the projection means (10) being arranged in such a way that the direction of projection (14) is secant to the longitudinal direction.

15. Public transport vehicle according to the preceding claim, **characterized in that** the lateral wall (5) exhibits a door (7), the projection means (10) and the acquisition means (16) being disposed on either side of the door (7) and/or above the door (7).

16. Method for detecting a platform in a zone of interest situated around a public transport vehicle, the platform comprising at least one arris (19, 20), the detection method being **characterized in that** it comprises the following steps:
- at least one light beam (11) is projected into the zone of interest in a direction of projection (14), the light beam (11) describing a projected pattern when the light beam encounters a surface in the zone of interest;
- an image (40) of the projected pattern is acquired from at least one viewpoint not aligned with the direction of projection and in such a way that the projected pattern exhibits at least one break (21, 22, 31) separating the projected pattern into at least two segments (23, 24, 25) when the light beam encounters an arris (19, 20) of the coping of the platform in the zone of interest, the platform being able to correspond to a segment;
- the segments of the image (40) of the projected pattern are compared and superposed with templates (29, 30, 32, 33, 37, 38); the templates being produced during a calibration procedure by calibration targets, and corresponding to types of platform and having given positions;
- the presence or the absence of the platform in the zone of interest is deduced therefrom.

17. Detection method according to the preceding claim, **characterized in that** it furthermore comprises a calibration procedure comprising the following steps:
- a horizontal plane surface is disposed in the light beam at a first given height,
- an image of the projected pattern of the light beam encountering the plane surface is acquired and the said image is stored in the guise of the one first of the said templates;
- the preceding two steps are repeated for at least one second height and a second of the said templates.

18. Detection method according to any one of Claims 16 to 17, **characterized in that** the pattern projected by the light beam on a plane surface not aligned with the direction of projection is composed of one or more parallel straight lines.

19. Detection method according to the preceding claim, **characterized in that** the projected pattern comprises between three and five parallel straight lines.

20. Detection method according to any one of Claims 16 to 19, **characterized in that** it furthermore comprises a step of calculating the position of the arris by triangulation.

21. Detection method according to any one of Claims 16 to 20, **characterized in that** it comprises the following steps:
- the segments of the image of the projected pattern are compared with a first series of templates making it possible to select the segments of the image of the projected pattern which have a position that may correspond to the platform;
- the segments of the image of the projected pattern are compared with a second series of templates making it possible to select the segments of the image of the projected pattern which have dimensions that may correspond to the platform.
